# EUROPÄISCHE PATENTSCHRIFT

(11) **EP 2 659 953 B1**
(45) Veröffentlichungstag und Bekanntmachung des Hinweises auf die Patenterteilung: **18.07.2018**
(21) Anmeldenummer: 13179017.2
(22) Anmeldetag: 30.03.2010
(51) Int. Cl.: B01D 65/00, B01D 53/22, B01D 63/06, C01B 3/50, B01J 19/24

(54) **Membranrohr und Herstellungsmethode**
Membrane pipe and method of production
Tube à membrane et son procédé de fabrication

(30) Priorität: 07.04.2009 DE 102009016694
(43) Veröffentlichungstag der Anmeldung: 06.11.2013
(62) Teilanmeldung aus: 10713423.1
(73) Patentinhaber: Plansee SE, 6600 Reutte / Tirol (AT)
(72) Erfinder: Wolfgang, Häring, 81479 München (DE); Nicole, Schödel, 81477 München (DE); Axel, Behrens, 80689 München (DE); Klaus, Klapper, 81825 München (DE); Matthias, Rüttinger, 6600 Reutte (AT); Karlheinz, Scheiber, 6600 Breitenwang (AT); Markus, Kögl, 6682 Vils (AT); Marco, Brandner, 87466 Oy-Mittelberg (DE)
(74) Vertreter: Ciesla, Bettina

(56) Entgegenhaltungen:
- WO-A2-2007/092844
- FR-A1- 2 858 776
- JP-A- H0 576 738
- JP-A- 2000 296 316
- JP-A- 2007 269 600

## Beschreibung

Die Erfindung betrifft ein Membranrohr zur permeativen Abtrennung von Wasserstoff aus Wasserstoff enthaltenden Gasgemischen, umfassend ein poröses Rohr aus einem Sintermetall sowie eine Palladium enthaltende oder aus Palladium bestehende Membran, die die Außenseite des Sintermetallrohrs umschließt.

Weiterhin betrifft die Erfindung ein Verfahren zur Herstellung eines Membranrohres sowie einen Reaktor mit wenigstens einem Membranrohr.

Reaktoren zur Wasserstoffgewinnung, mit denen Wasserstoff aus Wasserstoff enthaltenden Gasgemischen permeativ abgetrennt wird, sind der Fachwelt seit Jahrzehnten bekannt und werden in unterschiedlichen Bauarten kommerziell angeboten. Sie nutzen die Eigenschaft von Palladium oder Palladium enthaltenden Legierungen (im Weiteren seien unter dem Begriff Palladium auch Palladium enthaltende Legierungen, wie Pd-Ag- oder Pd-Cu-Legierungen, zu verstehen) aus, für Wasserstoff selektiv durchlässig zu sein. In der Praxis hat sich eine Konstruktion bewährt, bei der aus Palladiummembranen gebildete Rohre mit jeweils einem offenen Ende in eine Lochplatte eingeschweißt und dadurch fixiert sind. Das jeweils andere Ende eines Membranrohres ist dagegen gasdicht zugeschweißt, jedoch nicht im Reaktor fixiert. Die einseitige Fixierung der Membranrohre ist notwendig, weil sich die Membranen während des Reaktorbetriebs aufgrund von Erwärmung und der Aufnahme von Wasserstoff ausdehnen, was bei einer zweiseitigen Fixierung zu einem Auftreten von Spannungen und Verformungen sowie zu einer raschen Rissbildung führen würde, die eine Porosität der Membranen zur Folge hätte.

Um eine Palladiummembran zu stabilisieren wird beispielsweise in der Offenlegungsschrift DE 103 22 715 die Verwendung eines als Träger fungierenden Sintermetallkörpers angegeben, auf dem die Palladiummembran angebracht ist und der die im Einsatz auftretenden Kräfte zum überwiegenden Teil aufnimmt. Um zu verhindern, dass Metalle aus dem Sintermetallkörper in die Palladiummembran diffundieren und deren Wasserstoffdurchlässigkeit beeinträchtigen, wird zwischen der Außenseite des Sintermetallkörpers und der Palladiummembran eine dünne keramische Schicht als Diffusionssperre angebracht. Aus der Offenlegungsschrift DE 199 43 409 sind nach diesem Prinzip aufgebaute Membranrohre bekannt, die in Reaktoren mit Hilfe gängiger Schweißverfahren, wie z.B. dem WIG-Verfahren, eingeschweißt werden. In der Praxis hat sich gezeigt, dass es aufgrund der stark unterschiedlichen Eigenschaften von Sintermetallrohren und den aus metallischem Vollmaterial bestehenden Lochplatten sehr schwierig ist, die Schweißverbindungen dauerhaft gasdicht auszuführen. Bereits nach kurzen Betriebszeiten entstehen daher Risse, über die Retentat in den abgetrennten Wasserstoff (Permeat) gelangt und dieses verunreinigt. Gemäß der FR 2 858 776 A wird ein Fitting für eine Palladiummembran auf einem porösen Trägerrohr offenbart, welches das Trägerrohr von beiden Seiten einfasst. Gemäß der JP05076738 A wird die Membran direkt auf dem Trägerrohr befestigt. Die JP 2000296316 A offenbart ein die Trägerschicht einfassendes Fitting für eine Flachmembran. Aufgabe der vorliegenden Erfindung ist es, ein Membranrohr der gattungsgemäßen Art sowie ein Verfahren zu dessen Herstellung anzugeben, durch welche die Nachteile des Standes der Technik überwunden werden.

Die gestellte Aufgabe wird seitens des Membranrohres erfindungsgemäß dadurch gelöst, dass ein Membranrohr zur permeativen Abtrennung von Wasserstoff aus Wasserstoff enthaltenden Gasgemischen nach Anspruch 1 bereitgestellt wird. Im Rahmen dieser Patentanmeldung sei unter einem Fitting ein Teil zu verstehen, über das ein Membranrohr mit einem anderen Rohr und Anlagenteil verbindbar ist oder über das ein Membranrohr gasdicht abgeschlossen werden kann.

Vorzugsweise besteht ein Fitting aus Metall oder Keramik oder einem Metall und Keramik aufweisenden Kompositmaterial.

Das Fitting erlaubt es, ein erfindungsgemäßes Membranrohr mit einem anderen Bauteil, wie z.B. einer Lochplatte oder einem Rohr in einem Reaktor, mit Hilfe gängiger Verbindungstechniken, wie Schweißen, Löten, Kleben oder Schrauben, dauerhaft gasdicht zu verbinden.

Wie aus dem Stand der Technik bekannt, spielen bei der Verbindung zweier Metallteile durch Sintern oder Löten die Zusammensetzungen der Teile nur eine untergeordnete Rolle. Gleichgültig, ob die beiden Teile gleiche, ähnliche oder vollkommen unterschiedliche Zusammensetzungen aufweisen, lassen sie sich dauerhaft fest miteinander verbinden. Die Erfindung sieht daher vor, dass das Fitting aus einem Material besteht, das gleiche, eine ähnliche oder eine vollkommen unterschiedliche Zusammensetzung aufweist wie das Material, aus dem das Sintermetallrohr besteht. Voraussetzung ist allerdings, dass das Fitting aus einem entsprechend hochtemperaturbeständigen Material besteht, um den Sinterprozess, der typischerweise bei Temperaturen zwischen 1 000 und 1 600°C durchgeführt wird, oder den Lötvorgang, der typischerweise bei Temperaturen zwischen 450 und 1 300 °C durchgeführt wird, unbeschadet zu überstehen.

Reibschweißen ist eine dem Fachmann seit vielen Jahren bekannte Technologie (Handbuch der Schweißtechnik, Teil II, Böhme, Herrmann). Sie ist dazu geeignet, metallische Komponenten auf wirtschaftliche Weise dauerhaft miteinander zu verbinden, insbesondere dann, wenn die Komponenten aus unterschiedlichen Materialien bestehen und Rotationssymmetrie aufweisen. Beim Reibschweißen wird ein großflächiges Aufschmelzen der zu verschweißenden Teile vermieden. Dadurch vermindert sich die Gefahr von Schäden aufgrund thermischer Spannungen, da die sog. Wärmeeinflusszone wesentlich kleiner ausfällt als bei anderen Schweißverfahren und die Erwärmung sehr lokal begrenzt ist. Durch Reibschweißen wird eine poren- und fehlerfreie Verbindung erreicht. Ein evtl. entstehender Wulst kann nach der Schweißung abgetragen werden.

Zur Vermeidung von Zug- bzw. Druckspannungen zwischen Sintermetallrohr und Fitting, die beim Erwärmen eines Membranrohres aufgrund unterschiedlicher thermischer Ausdehnungskoeffizienten auftreten können, bestehen die Fittings vorzugsweise aus dem gleichen Material wie das Sintermetallrohr und das Anlagenteil, mit dem sie verbunden werden sollen. Die Erfindung sieht vor, dass die Palladiummembran das Sintermetallrohr an dessen Ende überragt und mit dem Fitting gasdicht verbunden ist.

Um zu verhindern, dass Metalle aus dem Sintermetallrohr in die Palladiummembran diffundieren und deren Wasserstoffdurchlässigkeit beeinträchtigen, sieht eine weitere zweckmäßige Ausgestaltung der Erfindung vor, dass das Membranrohr eine zwischen Sintermetallrohr und Palladiummembran angeordnete, als Diffusionssperre wirkende keramischen Schicht aufweist, die beispielsweise aus mit Yttrium teilstabilisiertem Zirkonoxid oder reinem Zirkonoxid oder Titanoxid oder Aluminiumoxid besteht.

Bevorzugte Ausgestaltungen des erfindungsgemäßen Membranrohres sehen vor, dass die Verbindungsfläche zwischen Fitting und Sintermetallrohr symmetrisch zur Achse des Membranrohrs angeordnet ist und die Form eines Kreisringes aufweist. Um die Festigkeit der Verbindung zwischen Fitting und Sintermetallrohr zu erhöhen, sieht eine weitere Ausgestaltung der Erfindung vor, dass die Verbindungsfläche zwischen den beiden Teilen aufgeraut oder mit Riefen oder Rillen versehen ist.

Weiterhin betrifft die Erfindung ein Verfahren zur Herstellung eines Membranrohres zur permeativen Abtrennung von Wasserstoff aus Wasserstoff enthaltenden Gasgemischen nach Anspruch 5, umfassend die Schritte:
a: Verbinden eines aus einem gasdichten Material bestehenden Fittings mit einem offene Ende eines gasdurchlässigen Sintermetallrohres;
b: Aufbringen einer Palladium enthaltenden oder aus Palladium bestehenden Membran, die das Sintermetallrohr vollständig überdeckt.
Die Palladiummembran wird so aufgebracht, dass sie den Fitting zumindest teilweise bedeckt und mit diesem gasdicht verbunden ist.

Bevorzugte Ausgestaltungen des erfindungsgemäßen Verfahrens sehen vor, dass das Fitting mit dem Sintermetallrohr durch Sintern oder Löten oder Reibschweißen verbunden wird.

Um Fitting und Sintermetallrohr miteinander zu verbinden, können erfindungsgemäß unterschiedliche Lötverfahren angewendet werden, wobei die bevorzugten Verfahren Weich- oder Hart- oder Hochtemperaturlötverfahren sind. Das dabei eingesetzte Lot ist den Materialien der zu verbindenden Teile artfremd und wird aus der Gruppe der Elemente Cu, Zn, Ni, AI, Sn, Fe, Pd, Au, Ag, Co, Cr, Si, B, Mo, W, Ti, P, C, In, Ge, V, Pb, Cd sowie deren Legierungen ausgewählt.

Da das Sintermetallrohr durch den Sinterprozess Abweichungen in der Rundheit sowohl von Außen- als auch Innendurchmesser aufweisen kann, sieht eine Ausgestaltung des erfindungsgemäßen Verfahrens vor, dass das Sintermetallrohr vor dem Verbinden direkt in oder auf das Fitting gewalzt oder gehämmert wird. Eine andere Ausgestaltung des erfindungsgemäßen Verfahrens sieht dagegen vor, dass das Sintermetallrohr in einem dem Verbinden vorangehenden Verfahrensschritt durch Walzen, Drehen oder Hämmern auf definierte Abmaße gebracht wird. Hierdurch ist es beispielsweise möglich, einen definierten und gleichmäßigen Lötspalt zwischen Fitting und Sintermetallrohr zu erhalten. Durch das Walzen bzw. Hämmern wird die Porosität des Sintermetallrohres im Übergangsbereich zum Fitting verringert, wodurch die Festigkeit der Verbindung erhöht wird. Außerdem wird im Falle einer Lötverbindung die Lotinfiltration verkleinert, was zu einer Verbesserung der Qualität der Lötnaht führt.

Eine Erhöhung der Festigkeit wird auch dadurch erreicht, dass die Verbindungsflächen zwischen Fitting und Sintermetallrohr vor dem Verbinden aufgeraut oder mit Rillen oder Riefen versehen werden.

Für den Fall, dass das Membranrohr mit einer zwischen Sintermetallrohr und Palladiummembran angeordneten, als Diffusionssperre wirkenden keramischen Schicht ausgeführt werden soll, sieht eine zweckmäßige Ausgestaltung des erfindungsgemäßen Verfahrens vor, dass zumindest die Außenseite des Sintermetallrohres mit der Diffusionssperre beschichtet wird, bevor die Palladiummembran so aufgebracht wird, dass sie die Diffusionssperre vollständig überdeckt. Vorzugsweise wird die Diffusionssperre aus mit Yttrium teilstabilisiertem Zirkonoxid oder reinem Zirkonoxid oder Titanoxid oder Aluminiumoxid ausgeführt.

Mit Hilfe des erfindungsgemäßen Membranrohres können Reaktoren zur Wasserstofferzeugung realisiert werden, die wesentlich wirtschaftlicher zu betreiben sind, als gegenwärtig nach dem Stand der Technik verfügbare Reaktoren, da sie haltbarer sind und die Gewinnung eines Wasserstoffproduktes mit höherer Reinheit erlauben. Es wird daher ein Reaktor zur Erzeugung von Wasserstoff vorgeschlagen, der wenigstens ein erfindungsgemäßes Membranrohr aufweist, wobei das Membranrohr einseitig über ein Fitting im Reaktor fixiert und gasdicht - beispielsweise über eine Schweißnaht - mit diesem verbunden ist.

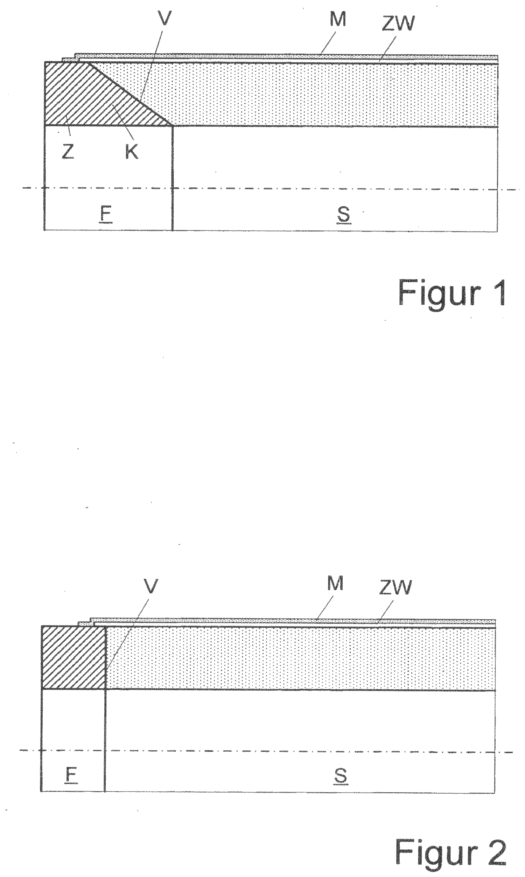

Im Folgenden soll die Form erfindungsgemäßer und nicht erfindungsgemäßer Verbindungsflächen zwischen einem Fitting und einem Sintermetallrohr anhand der in den Figuren 1 bis 7 schematisch dargestellten Ausführungsbeispiele näher erläutert werden. Die Figuren zeigen jeweils das offene Ende eines erfindungsgemäßen Membranrohres im Längsschnitt, wobei Fitting und Sintermetallrohre durch Sintern, Löten oder Reibschweißen miteinander verbunden sind. Das Ende des Sintermetallrohres kann in einem dem Sintern, Löten oder Reibschweißen vorangehenden Walzschritt an die Form des Fittings angepasst sein.

Das in Figur 1 dargestellte nicht erfindungsgemäße Membranrohr ist mit einem Fitting F ausgestattet, dessen Form sich aus einem Hohlzylinder Z und einem Konus K zusammensetzt, wobei Fitting F und Sintermetallrohr S gleiche Außen- und Innendurchmesser aufweisen. Fitting F und Sintermetallrohr S sind über die glatte Verbindungsfläche V, die die Form eines sich in Richtung des Fittings F öffnenden Kegelmantels aufweist, miteinander verbunden. Auf der Außenseite des Sintermetallrohres S ist eine keramische Zwischenschicht ZW als Diffusionssperre aufgebracht, die bis in den zylindrischen Teil Z des Fittings F hineinreicht. Über der Zwischenschicht ZW ist eine Palladiummembran M angebracht, die die Zwischenschicht ZW überragt und mit dem Fitting F gasdicht verbunden ist.

Die Figur 2 zeigt ein nicht erfindungsgemäßes Membranrohr mit einem Fitting F, das die Form eines Hohlzylinders aufweist, der die gleichen Außen- und Innendurchmesser wie das Sintermetallrohr S besitzt. Fitting F und Sintermetallrohr S sind über die Kreisringfläche V miteinander verbunden. Auf der Außenseite des Sintermetallrohres S ist eine keramische Zwischenschicht ZW aufgebracht, die auch einen Teil des Fittings F bedeckt. Über der Zwischenschicht ZW ist eine Palladiummembran M angebracht, die die Zwischenschicht ZW überragt und mit dem Fitting F gasdicht verbunden ist.

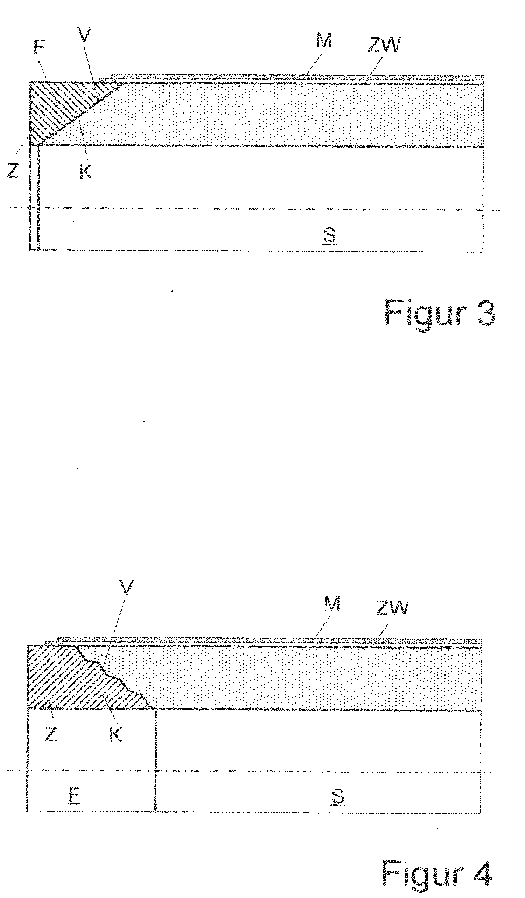

Das in Figur 3 dargestellte nicht erfindungsgemäße Membranrohr ist mit einem Fitting F ausgestattet, dessen Form sich aus einem Hohlzylinder Z und einem Konus K zusammensetzt, wobei Fitting F und Sintermetallrohr S gleiche Außen- und Innendurchmesser aufweisen. Fitting F und Sintermetallrohr S sind über die glatte Verbindungsfläche V, die die Form eines sich in Richtung des Sintermetallrohres S öffnenden Kegelmantels aufweist, miteinander verbunden. Auf der Außenseite des Sintermetallrohres S ist eine keramische Zwischenschicht ZW aufgebracht, die bis in den zylindrischen Teil Z des Fittings F hineinreicht. Über der Zwischenschicht ZW ist eine Palladiummembran M angebracht, die die Zwischenschicht ZW überragt und mit dem Fitting F gasdicht verbunden ist.

Die Figur 4 zeigt ein nicht erfindungsgemäßes Membranrohr mit einem Fitting F, dessen Form sich aus einem Hohlzylinder Z und einem Abschnitt K zusammensetzt der im Wesentlichen konisch geformt ist, wobei Fitting F und Sintermetallrohr S gleiche Außen- und Innendurchmesser aufweisen. Fitting F und Sintermetallrohr S sind über die Riefen oder Rillen aufweisende Verbindungsfläche V miteinander verbunden. Auf der Außenseite des Sintermetallrohres S ist eine keramische Zwischenschicht ZW aufgebracht, die bis in den zylindrischen Teil Z des Fittings F hineinreicht. Über der Zwischenschicht ZW ist eine Palladiummembran M angebracht, die die Zwischenschicht ZW überragt und mit dem Fitting F gasdicht verbunden ist.

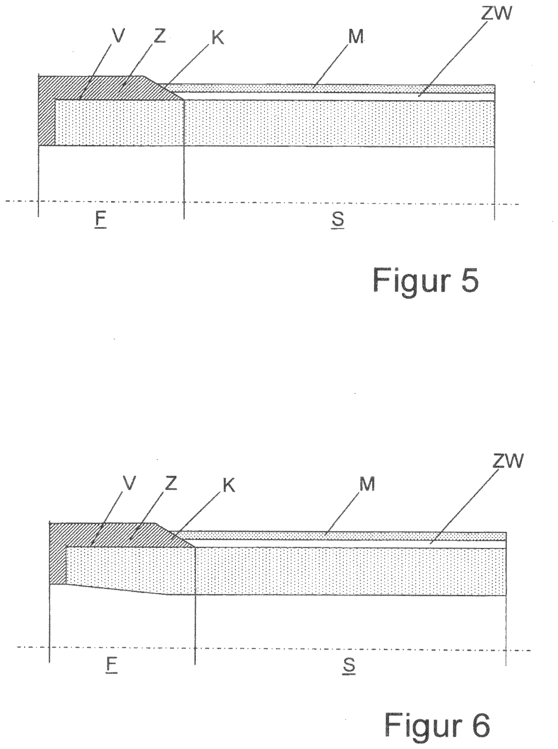

Die Figur 5 zeigt ein nicht erfindungsgemäßes Membranrohr mit einem Fitting F, dessen Form sich aus einem Hohlzylinder Z und einem Abschnitt K zusammensetzt, der im Wesentlichen konisch geformt ist, wobei der Innendurchmesser des Fittings F gleich dem Außendurchmesser des Sintermetallrohres S ist. Fitting F und Sintermetallrohr S sind über die Verbindungsfläche V miteinander verbunden. Auf der Außenseite des Sintermetallrohres ist eine keramische Zwischenschicht ZW aufgebracht, die auf dem konischen Teil des Fittings ausläuft oder bis in den zylindrischen Teil Z des Fittings hineinragt. Über der Zwischenschicht ZW ist eine Palladiummembran M angebracht, die die Zwischenschicht ZW überragt und mit dem Fitting F gasdicht verbunden ist.

Die Figur 6 zeigt ein nicht erfindungsgemäßes Membranrohr mit einem Fitting F, dessen Form sich aus einem Hohlzylinder Z und einem Abschnitt K zusammensetzt, der im Wesentlichen konisch geformt ist, wobei der Innendurchmesser des Fittings F gleich dem Außendurchmesser des Sintermetallrohres S ist. Fitting F und Sintermetallrohr S sind über die Verbindungsfläche V verbunden. Durch die Walzung ist das Ende des Sintermetallrohres S verdichtet und läuft konisch aus. Auf der Außenseite des Sintermetallrohres ist eine keramische Zwischenschicht ZW aufgebracht, die auf dem konischen Teil des Fittings ausläuft oder bis auf den zylindrischen Teil Z des Fittings hineinragt. Über der Zwischenschicht ZW ist eine Palladiummembran M angebracht, die die Zwischenschicht ZW überragt und mit dem Fitting F gasdicht verbunden ist.

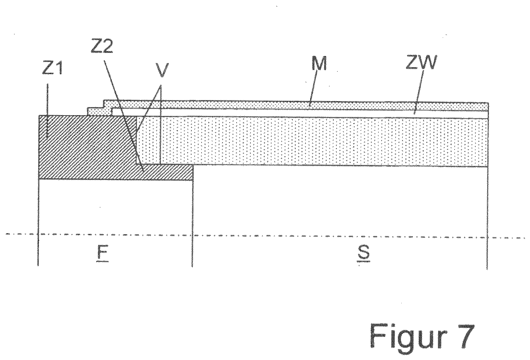

Die Figur 7 zeigt ein erfindungsgemäßes Membranrohr mit einem Fitting F, dessen Form sich aus zwei Hohlzylinder Z1 und Z2 zusammensetzt, wobei der Außendurchmesser von Z1 gleich dem Außendurchmesser und der Außendurchmesser Z2 gleich dem Innendurchmesser des Sintermetallrohres S ist. Fitting F und Sintermetallrohr S sind über die Verbindungsfläche V verbunden. Auf der Außenseite des Sintermetallrohres ist eine keramische Zwischenschicht ZW aufgebracht, die auf den zylindrischen Teil Z1 des Fittings F hineinragt. Über der Zwischenschicht ZW ist eine Palladiummembran M angebracht, die die Zwischenschicht ZW überragt und mit dem Fitting F gasdicht verbunden ist.

## Patentansprüche

1. Membranrohr zur permeativen Abtrennung von Wasserstoff aus Wasserstoff enthaltenden Gasgemischen, umfassend ein poröses Rohr (S) aus einem Sintermetall sowie eine Palladium enthaltende oder aus Palladium bestehende Membran (M), die die Außenseite des Sintermetallrohrs (S) umschließt, wobei das Sintermetallrohr (S) an mindestens einem Ende ein aus einem gasdichten Material bestehendes Fitting (F) aufweist, das mit dem Sintermetallrohr (S) fest verbunden ist, und wobei die Palladiummembran (M) das Sintermetallrohr (S) an dessen fittingseitigem Ende überragt und mit dem Fitting (F) gasdicht verbunden ist,
**dadurch gekennzeichnet, dass**
sich die Form des Fittings (F) aus zwei Hohlzylindern (Z1, Z2) zusammensetzt,
wobei der Außendurchmesser des ersten Hohlzylinders (Z1) gleich dem Außendurchmesser des Sintermetallrohrs (S) und der Außendurchmesser des zweiten Hohlzylinders (Z2) gleich dem Innendurchmesser des Sintermetallrohrs (S) ist und eine Verbindungsfläche (V) mit dem Innendurchmesser des Sintermetallrohres aufweist.

2. Membranrohr nach Anspruch 1, **dadurch gekennzeichnet, dass** das Fitting (F) aus Metall oder Keramik oder einem Metall und Keramik aufweisenden Kompositmaterial besteht.

3. Membranrohr nach Anspruch 1 oder 2, **dadurch gekennzeichnet, dass** das Membranrohr eine zwischen Sintermetallrohr (S) und Palladiummembran (M) angeordnete, als Diffusionssperre wirkende keramische Schicht (ZW) aufweist, die aus mit Yttrium teilstabilisiertem Zirkonoxid oder reinem Zirkonoxid oder Titanoxid oder Aluminiumoxid besteht.

4. Membranrohr nach einem der Ansprüche 1 bis 3, **dadurch gekennzeichnet, dass** die Verbindungsfläche (V) zwischen Fitting (F) und Sintermetallrohr (S) symmetrisch zur Achse des Membranrohrs angeordnet ist und die Form eines Kreisringes aufweist.

5. Verfahren zur Herstellung eines Membranrohres zur permeativen Abtrennung von Wasserstoff aus Wasserstoff enthaltenden Gasgemischen, umfassend die Schritte:
a. Verbinden eines aus einem gasdichten Material bestehenden Fittings (F) mit einem offenen Ende eines gasdurchlässigen Sintermetallrohres (S), wobei sich die Form des Fittings (F) aus zwei Hohlzylindern (Z1, Z2) zusammensetzt und wobei der Außendurchmesser des ersten Hohlzylinders (Z1) gleich dem Außendurchmesser des Sintermetallrohrs (S) und der Außendurchmesser des zweiten Hohlzylinders (Z2) gleich dem Innendurchmesser des Sintermetallrohrs (S) ist und eine Verbindungsfläche (V) mit dem Innendurchmesser des Sintermetallrohres aufweist;
b. Aufbringen einer Palladium enthaltenden oder aus Palladium bestehenden Membran, die das Sintermetallrohr vollständig überdeckt, wobei die Palladiummembran (M) das Sintermetallrohr (S) an dessen fittingseitigem Ende überragt und mit dem Fitting (F) gasdicht verbunden wird.

6. Verfahren nach Anspruch 5, **dadurch gekennzeichnet, dass** das Fitting (F) mit dem Sintermetallrohr (S) durch Sintern oder Löten oder Reibscheißen verbunden wird.

7. Verfahren nach Anspruch 5 oder 6, **dadurch gekennzeichnet, dass** das Sintermetallrohr (S) vor dem Verbinden direkt auf das Fitting (F) gewalzt oder gehämmert wird.

8. Verfahren nach einem der Ansprüche 5 oder 6, **dadurch gekennzeichnet, dass** das Sintermetallrohr (S) vor dem Verbinden durch Walzen oder Hämmern auf definierte Abmaße gebracht wird.

9. Verfahren nach einem der Ansprüche 5 bis 8, **dadurch gekennzeichnet, dass** zumindest die Außenseite des Sintermetallrohres (S) mit einer Diffusionssperre (ZW) beschichtet wird, bevor die Palladiummembran (M) so aufgebracht wird, dass sie die Diffusionssperre (ZW) vollständig überdeckt.

10. Reaktor zur Erzeugung von Wasserstoff, mit wenigstens einem nach dem beanspruchten Verfahren hergestellten Membranrohr, wobei das Membranrohr einseitig über ein Fitting (F) im Reaktor fixiert und gasdicht mit diesem verbunden ist.

## Claims

1. Membrane tube for the permeative separation of hydrogen from hydrogen-containing gas mixtures, which comprises a porous tube (S) made of a sintered metal and a membrane (M) which contains palladium or consists of palladium and encloses the outside of the sintered metal tube (S), wherein the sintered metal tube (S) has, at at least one end, a fitting (F) which consists of a gastight material and is fixed to the sintered metal tube (S), and wherein the palladium membrane (M) projects beyond the sintered metal tube (S) at its end at which the fitting is located and is joined in a gastight manner to the fitting (F), **characterized in that** the shape of the fitting (F) is made up of two hollow cylinders (Z1, Z2), where the external diameter of the first hollow cylinder (Z1) is equal to the external diameter of the sintered metal tube (S) and the external diameter of the second hollow cylinder (Z2) is equal to the internal diameter of the sintered metal tube (S), and has a joining area (V) with the internal diameter of the sintered metal tube.

2. Membrane tube according to Claim 1, **characterized in that** the fitting (F) consists of metal or ceramic or a composite comprising metal and ceramic.

3. Membrane tube according to any of Claims 1 or 2, **characterized in that** the membrane tube has a ceramic layer (ZW) which consists of zirconium oxide partially stabilized with yttrium or pure zirconium oxide or titanium oxide or aluminum oxide and acts as diffusion barrier and is arranged between sintered metal tube (S) and palladium membrane (M).

4. Membrane tube according to any of Claims 1 to 3, **characterized in that** the connecting area (V) between fitting (F) and sintered metal tube (S) is arranged symmetrically relative to the axis of the membrane tube and has the shape of a circular ring.

5. Process for producing a membrane tube for the permeative separation of hydrogen from hydrogen-containing gas mixtures, which comprises the steps:
a. joining a fitting (F) consisting of a gastight material to an open end of a gas-permeable sintered metal tube (S), where the shape of the fitting (F) is made up of two hollow cylinders (Z1, Z2) and wherein the external diameter of the first hollow cylinder (Z1) is equal to the external diameter of the sintered metal tube (S) and the external diameter of the second hollow cylinder (Z2) is equal to the internal diameter of the sintered metal tube (S) and has a joining area (V) with the internal diameter of the sintered metal tube;
b. application of a membrane containing palladium or consisting of palladium so as to completely cover the sintered metal tube, wherein the palladium membrane (M) projects beyond the sintered metal tube (S) at its end at which the fitting is located and is joined in a gastight manner to the fitting (F).

6. Process according to Claim 5, **characterized in that** the fitting (F) is joined to the sintered metal tube (S) by sintering or soldering or friction welding.

7. Process according to Claim 5 or 6, **characterized in that** the sintered metal tube (S) is rolled or hammered directly onto the fitting (F) before joining.

8. Process according to either Claim 5 or 6, **characterized in that** the sintered metal tube (S) is brought to defined dimensions by rolling or hammering before joining.

9. Process according to any of Claims 5 to 8, **characterized in that** at least the outside of the sintered metal tube (S) is coated with a diffusion barrier (ZW) before the palladium membrane (M) is applied in such a way that it completely covers the diffusion barrier (ZW).

10. Reactor for producing hydrogen, which has at least one membrane tube produced by the process claimed, wherein the membrane tube is fixed at one end via a fitting (F) in the reactor and is joined to the latter in a gastight manner.

## Revendications

1. Tube à membrane destiné à la séparation par perméation d'hydrogène à partir de mélanges de gaz contenant de l'hydrogène, comprenant un tube poreux (S) en un métal fritté, ainsi qu'une membrane (M) consistant en palladium ou contenant du palladium, qui entoure la face externe du tube (S) en métal fritté, le tube (S) en métal fritté comportant à au moins une extrémité un raccord (F) constitué d'un matériau imperméable aux gaz, qui est fixé au tube (S) en métal fritté, et la membrane (M) à base de palladium dépassant le tube (S) en métal fritté à son extrémité côté raccord et étant assemblée de façon imperméable aux gaz avec le raccord (F), **caractérisé en ce que** la forme du raccord (F) se compose de deux cylindres creux (Z1, Z2), le diamètre externe du premier cylindre creux (Z1) étant égal au diamètre externe du tube (S) en métal fritté et le diamètre externe du second cylindre creux (Z2) étant égal au diamètre interne du tube (S) en métal fritté et présentant une surface d'assemblage (V) avec le diamètre interne du tube en métal fritté.

2. Tube à membrane selon la revendication 1, **caractérisé en ce que** le raccord (F) consiste en métal ou céramique ou en un matériau composite comportant du métal et de la céramique.

3. Tube à membrane selon la revendication 1 ou 2, **caractérisé en ce que** le tube à membrane comporte une couche céramique (ZW) agissant comme barrière de diffusion, placée entre tube (S) en métal fritté et membrane (M) à base de palladium, qui est constituée d'oxyde de zirconium partiellement stabilisé avec de l'yttrium ou d'oxyde de zirconium pur ou d'oxyde de titane ou d'oxyde d'aluminium.

4. Tube à membrane selon l'une quelconque des revendications 1 à 3, **caractérise en ce que** la surface d'assemblage (V) entre raccord (F) et tube (S) en métal fritté est disposée symétriquement à l'axe du tube à membrane et a la forme d'une couronne torique.

5. Procédé pour la fabrication d'un tube à membrane destiné à la séparation par perméation d'hydrogène à partir de mélanges de gaz contenant de l'hydrogène, comprenant les étapes :
a. assemblage d'un raccord (F) constitué d'un matériau imperméable aux gaz avec une extrémité ouverte d'un tube (S) en métal fritté perméable aux gaz, la forme du raccord (F) se composant de deux cylindres creux (Z1, Z2) et le diamètre externe du premier cylindre creux (Z1) étant égal au diamètre externe du tube (S) en métal fritté et le diamètre externe du second cylindre creux (Z2) étant égal au diamètre interne du tube (S) en métal fritté et présentant une surface d'assemblage (V) avec le diamètre interne du tube en métal fritté ;
b. application d'une membrane consistant en palladium ou contenant du palladium, qui recouvre complètement le tube en métal fritté la membrane (M) à base de palladium dépassant le tube (S) en métal fritté à son extrémité côté raccord et étant assemblée de façon imperméable aux gaz avec le raccord (F).

6. Procédé selon la revendication 5, **caractérisé en ce qu'**on assemble par frittage ou brasage ou soudage par friction le raccord (F) avec le tube (S) en métal fritté

7. Procédé selon la revendication 5 ou 6, **caractérisé en ce qu'**avant l'assemblage directement dans ou sur le raccord (F) ou lamine ou martèle le tube (S) en métal fritté.

8. Procédé selon la revendication 5 ou 6, **caractérisé en ce qu'**avant l'assemblage on met le tube (S) en métal fritté à des dimensions définies par laminage ou martelage.

9. Procédé selon l'une quelconque des revendications 5 à 8, **caractérisé en ce qu'**on revêt au moins la face externe d'un tube (S) en métal fritté avec une barrière de diffusion (ZW) avant d'appliquer la membrane (M) à base de palladium, de sorte qu'elle recouvre complètement la barrière de diffusion (ZW).

10. Réacteur destiné à la production d'hydrogène, comportant au moins un tube à membrane fabriqué selon le procédé revendiqué, le tube à membrane étant fixé d'un côté par l'intermédiaire d'un raccord (F) dans le réacteur et raccordé de façon imperméable aux gaz avec celui-ci.
